# EUROPÄISCHE PATENTSCHRIFT

(11) **EP 3 334 520 B1**
(45) Veröffentlichungstag und Bekanntmachung des Hinweises auf die Patenterteilung: **29.11.2023**
(21) Anmeldenummer: 16744785.3
(22) Anmeldetag: 29.07.2016
(51) Int. Cl.: F16L 23/02, B01J 3/00, B01J 19/02, F16L 23/20

(54) **NICHMONOLITHISCHE VAKUUMKAMMER ZUM AUSFÜHREN VON VAKUUMANWENDUNGEN UND/ODER ZUR AUFNAHME VON VAKUUM-KOMPONENTEN**
NON-MONOLITHIC VACUUM CHAMBER FOR CARRYING OUT VACUUM APPLICATIONS, AND/OR FOR RECEIVING VACUUM COMPONENTS
CHAMBRE À VIDE NON MONOLITHIQUE POUR L'EXÉCUTION D'APPLICATIONS SOUS VIDE ET/OU LE LOGEMENT DE COMPOSANTS À VIDE

(30) Priorität: 12.08.2015 DE 102015215413
(43) Veröffentlichungstag der Anmeldung: 20.06.2018
(73) Patentinhaber: VACOM Vakuum Komponenten & Messtechnik GmbH, 07749 Jena (DE)
(72) Erfinder: WOLFGRAMM, Stephan, 99817 Eisenach (DE); GOTTSCHALL, Sophie, 07745 Jena (DE); FLÄMMICH, Michael, 07745 Jena (DE); BERGNER, Ute, 07749 Jena (DE)
(74) Vertreter: Meissner Bolte Partnerschaft mbB
(86) Internationale Anmeldenummer: PCT/EP2016/068122
(87) Internationale Veröffentlichungsnummer: WO 2017/025350

(56) Entgegenhaltungen:
- EP-A2- 1 795 757
- DE-U1- 29 918 170
- HAJIME ISHIMARU: "Bakable aluminium vacuum chamber and bellows with an aluminum flange and metal seal for ultrahigh vacuum", JOURNAL OF VACUUM SCIENCE AND TECHNOLOGY, Bd. 15, Nr. 6, 1. November 1978 (1978-11-01), Seite 1853, XP055310151, US ISSN: 0022-5355, DOI: 10.1116/1.569853

## Beschreibung

Die Erfindung betrifft eine Vakuumkammer zum Ausführen von Vakuumanwendungen und/oder zur Aufnahme von Vakuum-Komponenten nach Anspruch 1.

Vakuumkammern sind ein zentraler Bestandteil von Anlagen in der Vakuumtechnik und schließen den Raum des Vakuums von der umgebenden Atmosphäre ab. Vakuumkammern müssen daher in einem entsprechenden Maße druckstabil ausgebildet sein. Das Material von Vakuumkammern muss außerdem eine hinreichende Reinheit des Vakuums gewährleisten. Dabei ist besonders das Ausgasverhalten des Kammermaterials bei niedrigen Drücken zu beachten, weil die ausgegasten Stoffe das Vakuum verunreinigen und die darin ablaufenden technologischen Vorgänge und Prozesse beeinträchtigen können.

Das Mittel der Wahl bei der Fertigung von Vakuumkammern ist vor allem im UHV-und XHV-Vakuumbereich Edelstahl in einer sehr großen Bandbreite von Legierungen. In "Bakable aluminium vacuum chamber and bellows with an aluminum flange and metal seal for ultrahigh vacuum",JOURNAL OF VACUUM SCIENCE AND TECHNOLOGY, Bd. 15, Nr. 6, 1. November 1978 (1978-11-01), Seite 1853, von Hajime Ishimaru, sowie in der DE29918170 U1 und EP 1795757 A werden Anlagen und deren Dichtungen aus der Vakuumtechnik beschrieben.

Zum Dichten in der UHV Technik werden CF-Flansche mit Dichtflächen verwendet, die Schneidkanten aufweisen. CF-Flansche mit Schneidkanten werden bisher nur aus Aluminium - Kupfer Legierungen hergestellt, die eine Zugfestigkeit von 300 N/mm² aufweisen. Bei diesen Materialien scheidet das eigentlich in Hinblick auf seine duktilen Eigenschaften vorteilhafte Kupfer als Schneidkantenmaterial aufgrund von Kaltverschweißungen und der Diffusion des Kupfermaterials aus. Edelstahl ist hinreichend druckbeständig und sichert eine hohe Reinheit des Vakuums innerhalb der Vakuumkammer. Allerdings ist Edelstahl ein sehr kostspieliges Material, das die Vakuumkammer nicht unerheblich verteuert. Hinzu kommt die vergleichsweise hohe Dichte von Edelstahl, sodass sich die Masse einer Vakuumkammer entsprechend vergrößert und eine Leichtbauweise für Vakuumkammern ausscheiden muss.

Es besteht nun die Aufgabe, den genannten Nachteilen abzuhelfen und Vakuumkammern unter Überwindung von diesbezüglichen Vorurteilen der Fachwelt aus einem alternativen Material zu fertigen, wobei die Fertigung kostengünstiger erfolgen kann, die Vakuumkammer als Ganzes leichter ist und wobei überdies auch das Vakuum mit einer vergleichbaren Qualität wie bei einer Kammer aus Edelstahl beibehalten werden kann.

Die Aufgabe wird mit eine Vakuumkammer zum Ausführen von Vakuumanwendungen und/oder zur Aufnahme von Vakuum-Komponenten mit den Merkmalen des Anspruchs 1 gelöst. Diese umfasst einen Vakuumbehälter mit mindestens einem mit dem Vakuumbehälter verbundenen Flanschabschnitt, wobei der Vakuumbehälter und der Flanschabschnitt aus einer AluminiumLegierung bestehen.

Aluminium-Legierungen weisen eine geringere Dichte als Edelstahl auf, wodurch der Gesamtaufbau der Vakuumkammer in seiner Masse deutlich reduziert wird. Bislang wurden Aluminium-Legierungen als nachteilig in Hinblick auf die Verwendung in Vakuumkammern, insbesondere in Hinblick auf Porosität und Ausgasverhalten angesehen. Jedoch wurde festgestellt, dass bestimmte Aluminiumlegierungen unter bestimmten Behandlungsbedingungen relativ dichte Oxidschichten ausbilden, die zu hinreichend kleinen Ausgasraten führen, wodurch deren Verwendung in der Vakuumtechnik möglich ist.

Bei einer zweckmäßigen Ausgestaltung besteht der Vakuumbehälter aus einer ausgasarmen Aluminium-Legierung mit den Hauptbestandteilen Aluminium und Magnesium. Bei derartigen Legierungen hat es sich erwiesen, dass diese bei dem dafür üblichen Produktionshandling mit Kühlschmierstoffen und nasschemischen Reinigungsprozessen eine Oxidschicht ausbilden, die dicht ist und hinreichend geringe Ausgasraten bewirkt.

Bei einer weiteren Ausführungsform ist zwischen dem Vakuumbehälter und dem mindestens einen Flanschabschnitt ein Anschlussrohr vorgesehen. Dieses Anschlussrohr besteht ebenfalls aus der ausgasarmen Legierung mit den Hauptbestandteilen Aluminium und Magnesium oder es kann auch aus einer Aluminium-Legierung mit den Hauptbestandteilen Aluminium, Magnesium und Silizium bestehen. Die Wahl zwischen den beiden Legierungen erfolgt beispielsweise danach, wie große die innere Fläche des Anschlussrohes im Vergleich zur gesamten inneren Fläche der Vakuumkammer ist und wie hoch der Beitrag einer durch das Anschlussrohr verursachten Ausgasung auf die Zusammensetzung des Vakuums im Gesamtbereich der Vakuumkammer ist.

Bei einer weiteren Ausführungsform besteht der Flanschabschnitt aus der Aluminium-Legierung mit den Hauptbestandteilen Aluminium, Magnesium und Silizium. Bei dieser Legierungssorte handelt es sich um ein Material mit einer hinreichend großen Festigkeit, die für die Funktion des Flanschabschnittes von entscheidender Bedeutung ist. Da der Flanschabschnitt den kleinsten Teil der Vakuumkammer bildet, kann die in diesem Bereich geringfügig vergrößerte Ausgasraten in Kauf genommen werden, zumal der Flanschabschnitt in der Regel im Bereich der Peripherie der Vakuumkammer angeordnet ist und damit weit genug vom Volumen des Vakuumbehälters entfernt ist.

Bei einer Ausführungsform weist der Flanschabschnitt eine Dichtfläche mit einer Schneidkante auf. Die Ausgestaltung der Dichtfläche mit Schneidkante ist insbesondere dadurch zweckmäßig, weil die im Bereich des Flanschabschnittes vorgesehene AlMgSi-Legierung eine hohe Festigkeit aufweist und somit für eine Schneidkantendichtung eingesetzt werden kann.

Es hat sich gezeigt, dass AlMgSi-Legierungen mit einer Festigkeit, die vergleichbar mit der von Edelstahl ist, für CF Flansche geeignet sind und eine stabile Schneidkantengeometrie auch über mehrere Verwendungszyklen und längere Zeiträume gewährleisten. Diese Legierungen sind allerdings nicht so ausgasarm wie Alu/Magnesium Legierungen und weisen Ausgasraten von 10⁻¹² bis 10⁻¹³ mbar l/cm² auf. Weiterhin sind diese Flansche mit Kupfermaterialien abdichtbar, da sie in der Legierung selbst kein Kupfer enthalten.

Ergänzend ist bei einer Ausführungsform zur Verwendung mit der Schneidkante eine Schneidkantendichtung vorgesehen, wobei die Schneidkantendichtung aus einem sauerstoffarmen oder -freien Kupfermaterial ausgeführt ist.

Die sonst zu befürchtende Kontaktkorrosion tritt aufgrund der Verwendung von insbesondere OFHC Kupfer nicht auf.

Die Erfindung soll nun anhand von Ausführungsbeispielen näher erläutert werden. Zur Verdeutlichung dienen die Figuren 1 bis 6. Es werden für gleiche bzw. gleich wirkende Teile dieselben Bezugszeichen verwendet.

Es zeigt:
- Fig. 1: eine beispielhafte Darstellung einer Vakuumkammer mit den entsprechenden Komponenten,
- Fig. 2: eine beispielhafte Darstellung eines Flanschabschnitts und eines zugehörigen Anschlussrohres,
- Fig. 3: eine räumliche Darstellung der Anordnung aus Fig. 2,
- Fig. 4: zwei beispielhafte Ausführungsformen eines Flanschabschnittes,
- Fig. 5: eine beispielhafte Gesamtansicht eines Anschlussflansches mit einer Darstellung der Dichtfläche und Schneidkante sowie des Dichtmaterials,
- Fig. 6: ein beispielhaftes Schneidkantenprofil eines Anschlussflansches im Neuzustand und nach 50 Dichtzyklen.

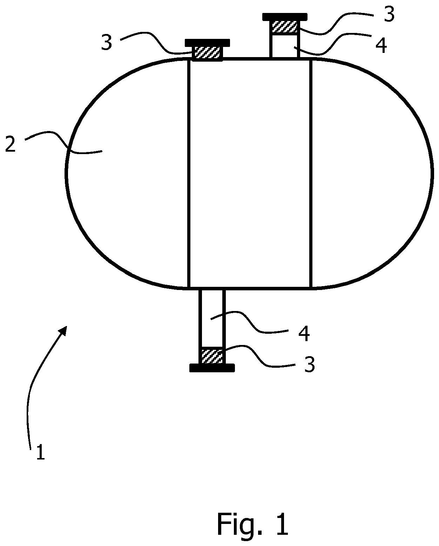

Fig. 1 zeigt eine beispielhafte Darstellung einer Vakuumkammer mit den entsprechenden Komponenten. Die Vakuumkammer 1 umfasst einen Vakuumbehälter 2 und in diesem Fall mehrere mit dem Vakuumbehälter entweder direkt verbundene Flanschabschnitte 3 oder Flanschabschnitte, die mit dem Vakuumbehälter über ein Anschlussrohr 4 verbunden sind. Der Vakuumbehälter bildet den eigentlichen Rezipienten und nimmt beispielsweise einschlägige Vakuumbauteile, wie Drucksensoren, Halterungen, Heizungen, Messtechnik, Sensoren und der gleichen weitere Mittel auf. Er wird über die Anschlussrohre evakuiert oder kann mit weiteren Vakuumbehältern verbunden sein. Im letzteren Fall besteht die Vakuumkammer aus mehreren miteinander über Anschlussrohre verbundenen Vakuumbehältern, wobei die Kopplung über die Flanschabschnitte erfolgt.

Die Vakuumkammer besteht in allen ihren Teilen aus einer Aluminium-Legierung. Dabei werden in einer besonders zweckmäßigen Ausgestaltung zwei unterschiedliche Legierungen verwendet, die in dem hier gegebenen Beispiel durch unschraffierte und schraffierte Bereiche verdeutlicht sind.

Die unschraffierten Komponenten bestehen aus einer Aluminium-Legierung, deren Hauptbestandteile Aluminium und Magnesium sind. Die schraffierten Komponenten bestehen aus einer Aluminium-Legierung, deren Hauptbestandteile Aluminium, Magnesium und Silizium sind.

Wie aus der Darstellung hervorgeht, besteht der Vakuumbehälter 2 aus einer AlMg-Legierung, während sämtliche Flanschabschnitte 3 aus der AlMgSi-Legierung ausgeführt sind. Die Anschlussrohre 4 können je nach Erfordernis entweder aus der AlMg-Legierung oder der AlMgSi-Legierung ausgeführt sein.

Der Grund für die unterschiedlich ausgebildeten Aluminium-Legierungen besteht darin, dass sich gezeigt hat, dass gerade AlMg-Legierungen relativ dichte Oxidschichten während eines Produktionshandlings und unter dem Einfluss von dort üblichen Kühlschmierstoffen und nachfolgenden nasschemischen Reinigungen ausbilden. Derartige dichte Oxidschichten weisen überraschend kleine Ausgasraten auf, die kleiner als 10⁻¹⁴ mbar l/cm² sein können. Sie sind somit zweckmäßig als Wandmaterial des Vakuumbehälters einsetzbar, weil diese das Vakuum im Inneren des Behälters nur in einem sehr geringen Maße verunreinigen. Diese Legierungen verfügen allerdings nicht über hohe Materialfestigkeiten, was bei der Gestaltung des Vakuumbehälters nicht von vorrangiger Bedeutung ist.

Hingegen bestehen sämtliche Flanschabschnitte 3 aus einer hochfesten AlMgSi-Legierung. Diese werden mit entsprechenden Komponenten, d.h. dem Vakuumbehälter bzw. dem Anschlussrohr verschweißt. Die Zugfestigkeiten dieser Legierungen liegen in der Größenordnung der Zugfestigkeiten von Edelstahl. Diese Festigkeit ist erforderlich, da die Flanschabschnitte die Anpresskräfte der Flanschverbindung aufnehmen und für die Abdichtung Sorge tragen müssen. Das für die AlMgSi-Legierung schlechtere Ausgasverhalten von 10⁻¹³ bis 10⁻¹² mbar l/cm² kann hier durchaus in Kauf genommen werden, wenn die Flanschabschnitte entweder klein im Vergleich zum Volumen des Vakuumbehälters sind, oder sich vom Vakuumkernbehälter in hinreichend großer Entfernung befinden.

Die Anschlussrohre können je nach Länge, zu erwartender Belastung oder nach Größe entweder aus der AlMg-Legierung oder der AlMgSi-Legierung bestehen. Eine AlMg-Legierung wird bevorzugt, wenn die Anschlussrohre eine relativ große innere Oberfläche besitzen oder wenn diese in der Nähe sensibler Teile der Vakuumkammer angeordnet sind. Eine AlMgSi-Legierung für die Anschlussrohre wird vorwiegend dann bevorzugt, wenn diese einer höheren Belastung ausgesetzt sind, wenn diese nur kurz und mit einer verhältnismäßig kleinen inneren Oberfläche ausgebildet sind, oder auch dann, wenn die Befestigung des Flanschabschnittes wegen dessen konstruktiver Gestaltung es erfordert. Im Rahmen der konstruktiven Erfordernisse und der vorgesehenen Verwendung der Vakuumkammer ist der Fachmann hier in seiner Wahl nicht eingeschränkt.

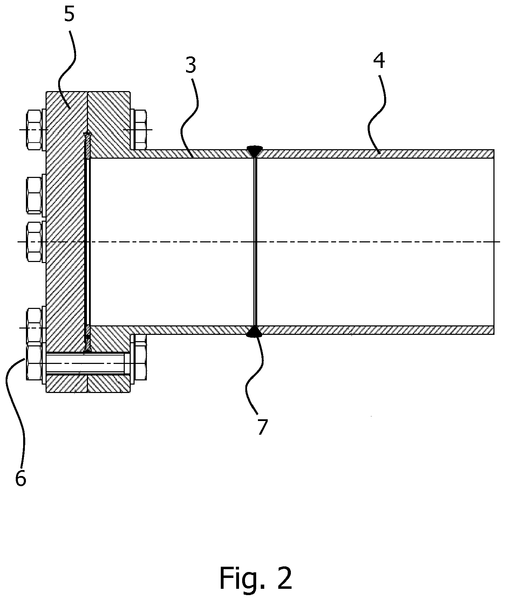

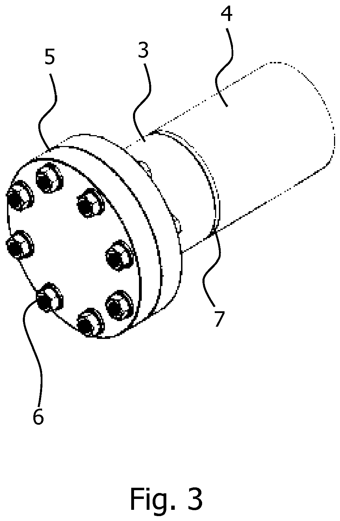

Fig. 2 zeigt in Verbindung mit Fig. 3 eine beispielhafte Darstellung eines Flanschabschnitts 3 und eines zugehörigen Anschlussrohres 4. Weiterhin ist hier ein Flanschdeckel 5 vorgesehen, der mit dem Flanschabschnitt 3 über eine Reihe von Befestigungsschrauben 6 verbunden ist. Der Flanschabschnitt 3 ist mit dem Anschlussrohr über eine Schweißnaht 7 verbunden. Unabhängig von der Art der Legierung des Anschlussrohres und des Flanschabschnittes kann hier das für Aluminiumlegierungen übliche Schweißverfahren angewendet werden. Dies ist insbesondere das WIG-Schweißverfahren, d.h. das Wolfram-Inertgas-Schweißen.

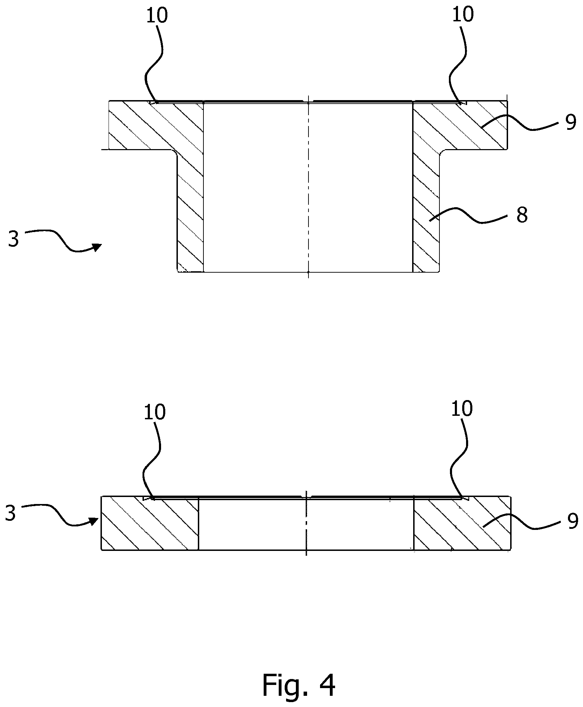

Bei einer Ausführungsform ist die Dichtfläche des Flanschabschnittes mit einer Schneidkante versehen, sodass der Flanschabschnitt zusammen mit dem Flanschdeckel einer Schneidkantendichtung ausbildet. Beispielhafte Gestaltungen des Flanschabschnittes sind in Fig. 4 gezeigt.

In der oberen Darstellung aus Fig. 4 ist ein Flanschabschnitt gezeigt, der der Ausführungsform aus Fig. 2 und 3 entspricht. Dieser weist einen Rohransatz 8 und einen Flanschkragen 9 auf. In der unteren Darstellung aus Fig. 4 ist ein Flanschabschnitt gezeigt, der ausschließlich aus einem Flanschkragen 9 besteht und somit in Form eines scheibenförmigen Ringes ausgebildet ist.

Die Dichtflächen der Flanschkragen 9 des Flanschabschnitts 3 weisen jeweils Schneidkanten 10 auf.

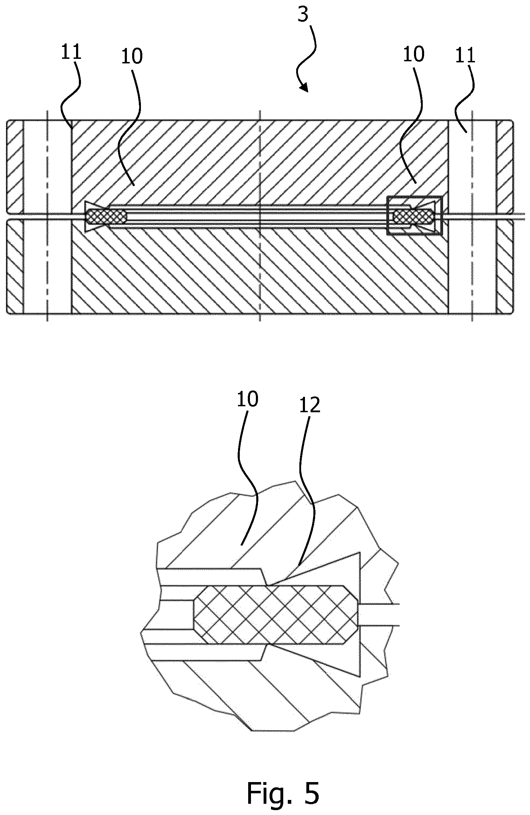

Fig. 5 zeigt einen hier als CF-Flansch ausgebildeten beispielhaften Flanschabschnitt 3, der erfindungsgemäß vollständig aus der genannten AlMgSi-Aluminiumlegierung ausgeführt ist. Die Figur zeigt einen Flanschabschnitt , der hier mit einem entsprechenden Gegenstück kombiniert ist. Der CF-Flanschabschnitt weist eine Dichtfläche auf, die im Randbereich eine im Bereich des Umfanges eine ringförmig verlaufende Schneidkante 10 enthält. Das Profil der Schneidkante ist in der darunter abgebildeten Einzeldarstellung im Detail gezeigt. Der Flanschabschnitt weist eine Reihe von Bohrungen 11 zum Einbringen der hier nicht dargestellten Spannmittel, insbesondere von Spannschrauben, auf.

Die durch diese Spannmittel ausgeübte Spannkraft führt zu einem auf die Schneidkanten sowohl des Flanschabschnittes als auch auf dessen Gegenstück einwirkenden Anpressdruck. Die Schneidkanten dringen hierdurch in ein darunter befindliches Dichtmaterial 12 ein. Dieses Dichtmaterial ist hier in Form eines Dichtringes ausgeführt, der auf die Schneidkanten aufgelegt ist. Als Dichtmaterial können hier unterschiedliche Materialien verwendet werden. Bei einer zweckmäßigen Ausführungsform kommt hier sauerstofffreies OFHC-Kupfermaterial zum Einsatz.

Reines Aluminium als Dichtmaterial scheidet aus, da Aluminium so weich ist, dass es an der Oberläche über sehr viele Mikrounebenheiten verfügt, sodass die in der UHV Technik geforderten Leckraten von < 10-10 mbar l/s nicht erreicht werden können.

An das Dichtmaterial werden verschiedene Anforderungen gestellt. Das Material muss hinreichend ausgasarm sein, es muss eine niedrige Gaspermeation zeigen. Deshalb kommen als Dichtmaterial nur Metalle in Betracht. Dies sind vor allem weiche Metalle, die hinreichend kratzfest sind, wie zum Beispiel das genannte OHFC-Kupfermaterial sowie nicht reines Aluminium. Das Dichtmaterial darf während des Dichtprozesses sowie auch bei Einwirkung von Wasser, Kühlschmiermitteln oder Wärme keine unlösbare Verbindung mit der Schneidkante eingehen. Die mittels des metallischen Dichtmaterials und des aus der Aluminiumlegierung gebildeten Flanschabschnitts ausgebildete Schneidkantendichtung zeichnet sich dadurch aus, dass bei einem hohen Anpressdruck weder Kontaktkorrosionen noch Kaltverschweißungen auftreten und unerwünschte Legierungen entstehen.

Anstelle der hier gezeigten CF-Flansch-Konfigurationen kann auch eine als QCF bezeichnete, hier nicht dargestellte Flanschkonfiguration vorgesehen sein, die vollkommen ohne Bohrungen und dort hindurch geführte Spannmittel und Spannschrauben auskommt. Die QCF-Konfiguration greift auf einen zur Peripherie hin konisch verlaufenden Scheibenkörper des Anschlussflansches zurück, wobei ein um den Umfang des Anschlussflansches herumgeführtes Spannmittel in Form einer Kette oder eines Bandes vorgesehen ist, die durch eine oder mehrere geeignete Spannvorrichtung konzentrisch angezogen werden kann und dabei über den konischen Scheibenkörper eine Anpresskraft auf die Dichtflächen und Schneidkanten ausübt.

Beim Dichtvorgang erfolgt bei den hier erwähnten Materialien eine Mikroverfestigung in der Schneidkantenspitze und es wird dadurch eine noch höhere Materialfestigkeit erzielt. Beim auf Block ziehen der beiden zu dichtenden Flansche, wobei der auf den Flanschabschnitt anschließende Flansch sowohl aus Aluminium als auch aus Edelstahl und anderen hochfesten Metallen bestehen kann, tritt keine Verformung der Schneidkante ein, sondern es kommt aufgrund einer Mikroverdichtung zu einer weiteren Erhöhung der Festigkeit an der Schneidkante.

Nachfolgend soll auf die Widerstandsfähigkeit der Schneidkanten des erfindungsgemäßen CF-Anschlussflansches in Hinblick auf einwirkende Druckkräfte eingegangen werden, mit denen die durch die Maßgestaltung der Anschlussflansche gesicherte Wärmebeständigkeit der Schneidkanten hinsichtlich der Festigkeit zusätzlich vorteilhaft beeinflusst werden kann.

Schematisch können die Druckverhältnisse und die auftretenden Verformungseffekte an der Spitze einer Schneidkante beim Eindringen in die Oberfläche des Dichtmaterials durch finite Elemente simuliert werden. Beim Eindringen der Schneidkante in die Oberfläche des Dichtmaterials tritt an deren Spitze eine Verkleinerung der finiten Elemente ein, das Material der Schneidkante wird quasi verdichtet, während im Dichtmaterial unmittelbar vor der Schneidkantenspitze auseinander gezogen wird, wobei sich dadurch die Schneidwirkung der Schneidkante zeigt. Interessant ist, dass gerade der Schneidvorgang das Material der Schneidkante an deren Spitze verfestigt und so eine Verformung der Spitze erschwert.

Dieser Prozess der Kaltverfestigung der Schneidkante kann aber auch bereits beim Herstellungsprozess des Schneidkantenprofils ausgenutzt werden, wenn der Flanschabschnitt aus der AlMgSi-Legierung besteht. Die Schneidkante wird hierbei durch ein nicht spanabhebendes Umformverfahren, beispielsweise ein Einprägen oder ein Einwalzen des Schneidkantenprofils in den Rohling des Anschlussflansches erzeugt, wobei die entsprechende Gefügeverdichtung zusammen mit einem charakteristischen Verlauf der Werkstofffasern im Bereich der Schneidkante erzeugt wird. Das Herstellungsverfahren lässt sich problemlos im Anschliff der Schneidkante in Verbindung mit einem Anätzen des Schliffes auch am fertigen Anschlussflansch nachweisen.

Um zu überprüfen, ob eine CF-Schneidkante aus einer Aluminiumlegierung vielfachen Dichtprozessen standhält, können die genannten finite Elemente-Simulationen mit experimentellen Ergebnissen verglichen und dabei verifiziert werden. Unter Berücksichtigung der Materialdaten wird im Rahmen der Simulationen ein geeignetes Netz über die Schneidkante gelegt und die Flansche über eine Dichtung auf Block gezogen. Die Kraft wurde über die notwendige Bewegung von 350 µm ermittelt.

Es zeigt sich, dass eine maximale Deformation an der Spitze der Schneidkante erfolgt, die dann allerdings mit weiteren Dichtungszyklen schnell nachlässt und schließlich aufhört. Besonders gute Ergebnisse werden hier bei Flansch-Dichtungs-Konfigurationen erreicht, bei denen die Anschlussflansche und damit die Schneidkanten aus einer Alu6xxx-Legierung bestehen, während das dazwischen gelagerte Dichtmaterial aus Alu1000 und somit faktisch aus Reinaluminium besteht. Allgemein hat es sich als zweckmäßig erwiesen, dass das Dichtmaterial eine Zugfestigkeit von 30 MPa nicht überschreiten sollte, um die hier erwähnten Verfestigungseffekte nicht zu beeinträchtigen. Für eine Alu6xxx-1xxx-6xxx-Flansch-Dichtmaterial-Konfiguration wurden folgende Ergebnisse für die Deformationen in Abhängigkeit von der Zahl der Dichtungszyklen gemessen:
▪ 1. Dichtungszyklus: 6 µm Deformation
▪ 2. Dichtungszyklus: 5 µm Deformation
▪ 3.- 9. Dichtungszyklus kleiner 1 µm Deformation
▪ ab 10. Dichtungszyklus: 0 Deformation

Bei jedem Dichtungsvorgang erfolgt somit eine Kaltverfestigung des Materials, die zur Erhöhung der Festigkeit im Schneidkantenbereich führt. Dadurch wird ein Selbstkonditionierungsprozess für den langlebigen Einsatz von Aluminiumschneidkanten ausgelöst.

Diese Ergebnisse können experimentell verifiziert werden, indem die Schneidkanten im anfänglich ungenutzten Zustand und nach jedem Dichtungszyklus mit einem Profilometer vermessen wurden. Ein Profilometer ist ein entweder taktil mittels mechanischer Abtastung oder ein optisch arbeitendes Gerät zur mikroskopischen bzw. submikroskopischen Vermessung von Oberflächengeometrien.

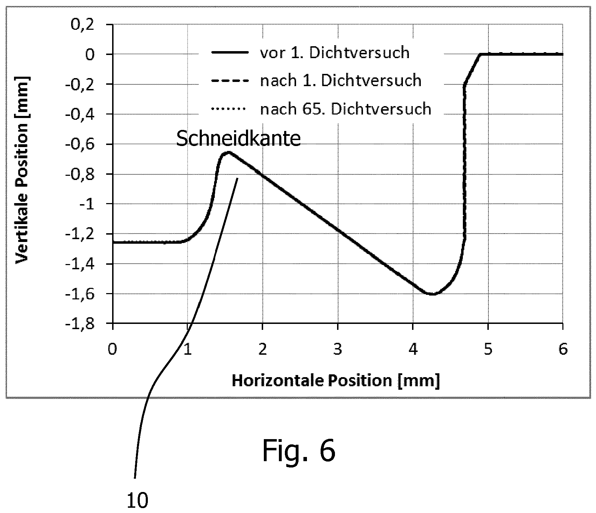

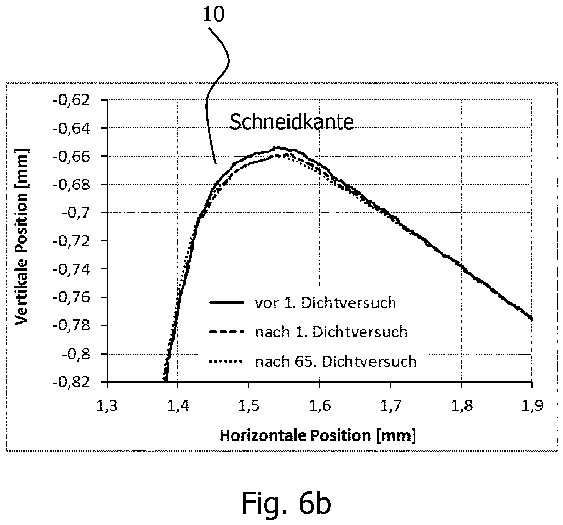

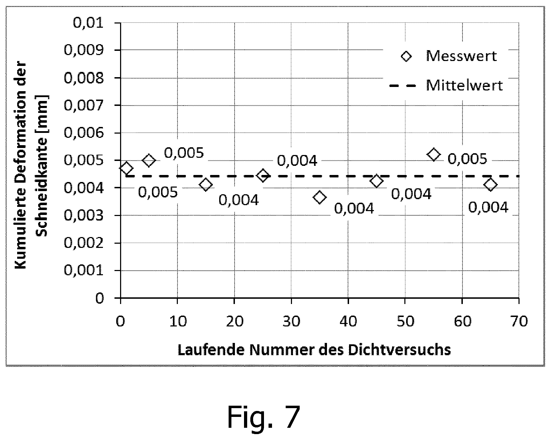

Ein entsprechendes Messresultat ist in Fig. 6 beispielhaft dargestellt. Die Graphik zeigt eine mit dem Profilometer aufgenommene Oberflächengeometrie einer Schneidkante 10 im Bereich der Dichtflächenperipherie. Das dargestellte reale Profil entspricht sinngemäß der Detaildarstellung in der technischen Zeichnung aus Fig. 5. Die Darstellung aus Fig. 6 zeigt in der y-Achse eine vertikale Höhendifferenz zu einem vorgegebenen Referenzwert in Abhängigkeit von der lateralen Position.

In der hier vorliegenden Darstellung sind zum einen ein neues Schneidkantenprofil und ein nach 50 Dichtzyklen erneut vermessenes Schneidkantenprofil gezeigt. Beide Kurven liegen praktisch ununterscheidbar übereinander.

Bei allen Dichtzyklen wurde eine Leckrate der Dichtungsanordnung von weniger als 1▪10⁻⁹ mbar l/s erreicht.

Zur Funktionserfüllung muss die Zugfestigkeit an der Schneidkante mind. 200 MPa betragen. Erfüllt werden diese Bedingungen von aushärtbaren Aluminiumwerkstoffen der EN AW-Gruppe 5 und 6 mit den Hauptlegierungselementen Magnesium und Silizium. Die Funktionserfüllung der Schneidkante beim mehrmaligen Öffnen und Schließen des Flansches gilt als gegeben, wenn die Deformation der Schneidkante in der Achse des Flansches, d.h. die Verringerung der Schneidkantenhöhe, unterhalb 5 µm bleibt.

Messungen zeigen, dass nach 60 Dichtzyklen die Deformation der Schneidkante unter der Grenze von 5 µm bleibt.

Die Untersuchungen zeigen somit, dass Aluminiumschneidkanten aus 6000er Aluminiumlegierungen in Kombination mit reinen Aluminiummaterialien zum stabilen Langzeiteinsatz im Bereich der Flanschabschnitte geeignet sind. Die mechanische Festigkeit von 6000er Al-Legierungen reicht somit aus, um stabile CF-Schneidkanten herzustellen. Wichtig ist dabei, dass im Verarbeitungsprozess und in der Anwendung die Materialhöchsttemperaturen zum Erhalt der notwendigen mechanischen Festigkeit nicht überschritten werden.

Die erfindungsgemäße Vorrichtung wurde anhand beispielhafter Ausführungsformen erläutert. Im Rahmen fachmännischen Handelns sind weitere Ausführungsformen möglich. Diese ergeben sich darüber hinaus auch aus den Unteransprüchen.

### Bezugszeichenliste

- 1: Vakuumkammer
- 2: Vakuumbehälter
- 3: Flanschabschnitt
- 4: Anschlussrohr
- 5: Flanschdeckel
- 6: Befestigungsschraube
- 7: Schweißnaht
- 8: Rohransatz
- 9: Flanschkragen
- 10: Schneidkante
- 11: Bohrung
- 12: Dichtmaterial

## Patentansprüche

1. Vakuumkammer (1) zum Ausführen von Vakuumanwendungen und/oder zur Aufnahme von Vakuum-Komponenten, umfassend einen Vakuumbehälter (2) mit mindestens einem mit dem Vakuumbehälter verbundenen Flanschabschnitt (3),
**dadurch gekennzeichnet, dass**
der Vakuumbehälter vollständig aus einer Aluminiumlegierung besteht und der mindestens eine Flanschabschnitt vollständig aus einer Aluminium-Legierung besteht und der mindestens eine Flanschabschnitt (3) eine Dichtfläche mit einer aus einer Aluminium-Legierung bestehenden Schneidkante (10) aufweist.

2. Vakuumkammer nach Anspruch 1,
**dadurch gekennzeichnet, dass**
zwischen dem Vakuumbehälter und dem mindestens einen Flanschabschnitt ein Anschlussrohr vorgesehen ist, wobei das Anschlussrohr (4) aus einer ausgasarmen Aluminium-Legierung mit den Hauptbestandteilen Aluminium und Magnesium oder aus einer AluminiumLegierung mit den Hauptbestandteilen Aluminium, Magnesium und Silizium besteht.

3. Vakuumkammer nach Anspruch 1,
**dadurch gekennzeichnet, dass**
der Flanschabschnitt (3) aus einer Aluminium-Legierung mit den Hauptbestandteilen Aluminium, Magnesium und Silizium besteht.

4. Vakuumkammer nach Anspruch 1,
**dadurch gekennzeichnet, dass**
zur Verwendung mit der Schneidkante (10) eine Schneidkantendichtung (12) vorgesehen ist, wobei die Schneidkantendichtung aus einem OHFC-Kupfermaterial ausgeführt ist.

## Claims

1. Vacuum chamber (1) for carrying out vacuum applications and/or for receiving vacuum components, comprising a vacuum vessel (2) with at least one flange section (3) connected to the vacuum vessel,
**characterized in that**
the vacuum vessel is made entirely of an aluminium alloy, at least one flange section is made entirely of an aluminium alloy, and at least one flange section (3) comprises a sealing surface with a cutting edge (10) made of an aluminium alloy.

2. The vacuum chamber according to Claim 1, **characterized in that** a connection pipe is provided between the vacuum vessel and at least one flange section, wherein the connection pipe (4) consists of a low-outgassing aluminium alloy comprising the main components aluminium and magnesium, or consists of an aluminium alloy comprising the main components aluminium, magnesium and silicon.

3. The vacuum chamber according to Claim 1, **characterized in that** the flange section (3) consists of an aluminium alloy comprising the main components aluminium, magnesium and silicon.

4. The vacuum chamber according to Claim 1, **characterized in that** a cutting-edge seal (12) is provided for use with the cutting edge (10), wherein the cutting-edge seal is made of an OHFC-copper material.

## Revendications

1. Chambre à vide (1) destinée à exécuter des applications sous vide et/ou à loger des composants à vide, comprenant un récipient à vide (2) pourvu d'au moins une portion de bride (3) reliée au récipient à vide,
**caractérisée en ce que**
le récipient à vide est constitué complètement d'un alliage d'aluminium, et ladite au moins une portion de bride est constituée complètement d'un alliage d'aluminium, et ladite au moins une portion de bride (3) présente une surface d'étanchéité pourvue d'une arête tranchante (10) constituée d'un alliage d'aluminium.

2. Chambre à vide selon la revendication 1,
**caractérisée en ce que**
un tube de raccordement est prévu entre le récipient à vide et ladite au moins une portion de bride, le tube de raccordement (4) étant constitué d'un alliage d'aluminium à faible dégagement gazeux, ayant les composants principaux aluminium et magnésium, ou d'un alliage d'aluminium ayant les composants principaux aluminium, magnésium et silicium.

3. Chambre à vide selon la revendication 1,
**caractérisée en ce que**
la portion de bride (3) est constituée d'un alliage d'aluminium ayant les composants principaux aluminium, magnésium et silicium.

4. Chambre à vide selon la revendication 1,
**caractérisée en ce que**
un joint d'étanchéité (12) de l'arête tranchante est prévu pour être utilisé avec l'arête tranchante (10), le joint d'étanchéité de l'arête tranchante étant réalisé en un matériau de cuivre exempt d'oxygène à haute conductivité (OFHC).
